# EUROPEAN PATENT APPLICATION

(11) **EP 4 557 477 A1**
(43) Date of publication of application: **21.05.2025**
(21) Application number: 24213463.3
(22) Date of filing: 16.11.2024
(51) Int. Cl.: H01M 50/211, H01M 50/242, H01M 50/289

(54) **BATTERY MODULE**

(30) Priority: 16.11.2023 KR 20230158988
(71) Applicant: SK On Co., Ltd., Seoul 03161 (KR)
(72) Inventor: RHEE, Seo Roh, Daejeon 34124 (KR); HONG, Sung Min, Daejeon 34124 (KR); KIM, Dong Jin, Daejeon 34124 (KR); LEE, Seung Dong, Daejeon 34124 (KR); LIM, Ji Hoon, Daejeon 34124 (KR)
(74) Representative: Stolmár & Partner Patentanwälte PartG mbB

(57) **Abstract**

A battery module in which the lifespan, displacement, voltage, capacity, etc. of each battery cell constituting the battery module are uniform according to one embodiment of the present disclosure may include: a module case forming an accommodating space; a plurality of battery cells disposed in the accommodating space; a first pad portion disposed between at least one pair of adjacent battery cells among the plurality of battery cells; and a second pad portion disposed between a side wall of the module case and a battery cell closest to the side wall of the module case, where the surface pressure applied by the first pad portion to an adjacent battery cell may be less than the surface pressure applied by the second pad portion to an adjacent battery cell.

## Description

### BACKGROUND OF THE INVENTION

### 1. Field

The present disclosure relates to a battery module.

### 2. Description of the Related Art

A battery module is one of battery assemblies. A battery module may include a module case and a plurality of battery cells accommodated within the module case. Battery cells may expand during charging and discharging processes due to gas generation by side reactions or the like. This phenomenon may be referred to as swelling. Swelling of a battery cell may damage an adjacent battery cell.

To prevent this, a member such as a buffer pad may be introduced into the battery module. A buffer pad may be compressed in the direction in which the battery cell swells and then restored to suppress swelling of the battery cell.

The impact of swelling of a battery cell on a battery module may vary depending on the position at which a buffer pad is disposed and the material thereof. For example, the lifespan of a battery module, the lifespan, displacement, voltage, and capacity of each battery cell in the battery module, and the like may vary depending on the position at which a buffer pad is disposed and the material thereof.

### SUMMARY OF THE INVENTION

According to one aspect of the present disclosure, a battery module with improved lifespan can be provided.

According to one aspect of the present disclosure, a battery module with improved stability can be provided.

According to one aspect of the present disclosure, a battery module in which the lifespan, displacement, voltage, capacity, etc. of each battery cell constituting the battery module are uniform can be provided.

Meanwhile, the battery cell and the battery module including the same according to the present disclosure can be widely applied in the field of electric vehicles, battery charging stations, energy storage system (ESS), and green technology such as photovoltaics and wind power generation using batteries. In addition, the battery cell and the battery module including the same according to the present disclosure can be used in eco-friendly mobility, including electric vehicles and hybrid vehicles, to prevent climate change by suppressing air pollution and greenhouse gas emissions.

A battery module of one embodiment of the present disclosure may include: a module case forming an accommodating space; a plurality of battery cells disposed in the accommodating space; a first pad portion disposed between at least one pair of adjacent battery cells among the plurality of battery cells; and a second pad portion disposed between a side wall of the module case and a battery cell closest to the side wall of the module case; wherein the surface pressure applied by the first pad portion to an adjacent battery cell may be less than the surface pressure applied by the second pad portion to an adjacent battery cell.

In one embodiment, the first pad portion may include a first region and a second region which are different regions on the same plane, and the compression force deflection (CFD) of each of the first region and the second region may be the same.

In one embodiment, the first pad portion may include a first region and a second region which are different regions on the same plane, and the compression set of each of the first region and the second region may be the same.

In one embodiment, the second pad portion may include a first region and a second region which are different regions on the same plane, and the CFD of each of the first region and the second region may be the same.

In one embodiment, the second pad portion may include a first region and a second region which are different regions on the same plane, and the compression set of each of the first region and the second region may be the same.

In one embodiment, the CFD of the first pad portion may be smaller than the CFD of the second pad portion.

In one embodiment, the compression set of the first pad portion may be smaller than the compression set of the second pad portion.

In one embodiment, the distance between both side surfaces of the first pad portion facing one battery cell among the plurality of battery cells along the stacking direction may be longer than the distance between both side surfaces of the second pad portion facing one battery cell among the plurality of battery cells along the stacking direction.

In one embodiment, the battery module may further include: a stacking portion stacked on at least one side surface among both side surfaces of the first pad portion facing one battery cell among the plurality of battery cells along the stacking direction.

In one embodiment, the total volume of the first pad portion and the second pad portion may occupy 2% by volume to 7% by volume of the accommodating space.

In one embodiment, each of the plurality of battery cells may include: a main body portion including an electrode assembly storing or generating electrical energy; and an electrode lead electrically connected to the electrode assembly and also protruding from the main body portion to electrically connect the electrode assembly to the outside; wherein each of the first pad portion and the second pad portion may be disposed adjacent to the main body portion of the battery cell.

In one embodiment, the battery module may further include: a heat dissipation portion disposed between the bottom surface of the module case and the plurality of battery cells.

In one embodiment, the battery module may further include: a busbar assembly disposed in the accommodating space and electrically connecting the plurality of battery cells to the outside.

In one embodiment, each of the plurality of battery cells, the first pad portion, and the second pad portion may be disposed vertically with respect to the bottom surface of the module case.

A battery module of another embodiment of the present disclosure may include: a plurality of battery groups, each of which is a bundle of a plurality of battery cells; a module case accommodating the plurality of battery groups; a first pad portion disposed between at least one pair of adjacent battery cells among the plurality of battery cells; and a second pad portion disposed between a side wall of the module case and a battery cell closest to the side wall of the module case; wherein the surface pressure applied by the first pad portion to an adjacent battery cell may be less than the surface pressure applied by the second pad portion to an adjacent battery cell.

In one embodiment, the other battery group adjacent to the one pair of battery groups between which the first pad portion is disposed may be in contact with one battery group among the one pair of battery groups.

In one embodiment, battery cells of the plurality of battery groups may be electrically connected in parallel with each other, and the plurality of battery groups may be electrically connected in series with each other.

Meanwhile, a battery module according to the present disclosure may include: a cell assembly including a plurality of battery cells stacked in a preset stacking direction; a module case accommodating the cell assembly; a first pad portion positioned in at least a part of the spaces between the plurality of battery cells; and a second pad portion positioned between the cell assembly and the module case along the stacking direction and formed with a thickness less than or equal to the thickness of the first pad portion based on the stacking direction.

In addition, when the first pad portion and the second pad portion are formed of the same material, the thickness of the first pad portion and the thickness of the second pad portion may be different from each other.

Meanwhile, when at least one of the plurality of battery cells expands, the volume occupied by the first pad portion and the second pad portion in the accommodating space may decrease.

According to one embodiment of the present disclosure, the lifespan of a battery module may be improved.

According to one embodiment of the present disclosure, the stability of a battery module may be improved. According to one embodiment of the present disclosure, the lifespan, displacement, voltage, capacity, etc. of each battery cell constituting a battery module may be uniform.

### BRIEF DESCRIPTION OF THE DRAWINGS

FIG. 1 shows an exploded perspective view of a battery module of one embodiment.
FIG. 2 shows a cross-sectional view of a battery module of one embodiment.
FIG. 3 shows a cross-sectional view of a battery module of one embodiment.
FIG. 4 shows a cross-sectional view of a battery module of one embodiment.
FIG. 5 shows a cross-sectional view of a battery module of one embodiment.
FIG. 6 shows a cross-sectional view of a battery module of one embodiment.
FIG. 7 shows a cross-sectional view of a battery module of one embodiment.

### DETAILED DESCRIPTION

Hereinafter, the present disclosure will be described in detail with reference to the attached drawings. However, this description is merely illustrative. The scope of the present disclosure is not limited to the specific embodiments described in an illustrative manner.

One embodiment of the present disclosure relates to a battery module 200. A battery module is one of battery assemblies that bundles a plurality of battery cells 110.

In the present disclosure, the term "battery cell" may refer to a basic unit of a lithium secondary battery capable of charging and discharging electric energy. The battery cell 110 may include a cathode, an anode, a separator, and an electrolyte as main components. The battery cell 110 may include these main components and a case that accommodates them. The battery cell 110 may further include electrode leads 111 and 112. The electrode leads 111 and 112 may be connected to each of the cathode and the anode. The electrode leads 111 and 112 may protrude outside the case to electrically connect the battery cell 110 to the outside.

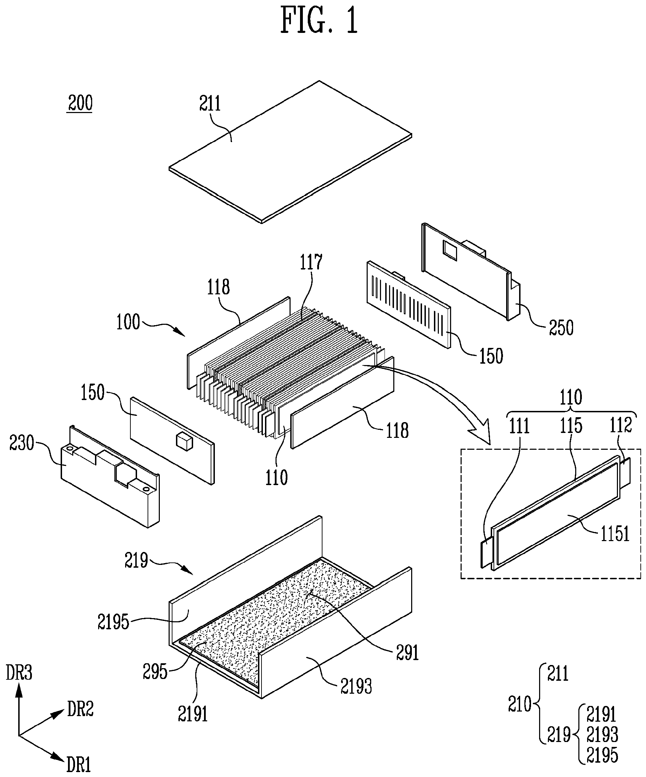

FIG. 1 shows an exploded perspective view of a battery module of one embodiment.

A battery module 200 of one embodiment of the present disclosure may include: a module case 210; a plurality of battery cells 110; and a plurality of pad portions 117 and 118 that are distinguished from each other.

In one embodiment, the module case 210 may form an accommodating space 291.

Referring to FIG. 1, the module case 210 may include a module body 219 and a module cover 211 coupled with the module body 219. The module body 219 may have a U-shape or a channel shape with an open upper surface when viewed in a second direction DR2. The module body 219 may include: a module bottom surface 2191 forming the bottom surface of the accommodating space 291 and the bottom surface of the module case 210; and a module first side surface 2193 and a module second side surface 2195 facing each other among side surfaces of the accommodating space 291. The module first side surface 2193 and the module second side surface 2195 may each be connected to the module bottom surface 2191 to form a module body 219. The module cover 211 may be positioned to face the module bottom surface 2191. The module cover 211 may be coupled to the module body 219 through the module first side surface 2193 and the module second side surface 2195.

In addition, the module case 210 may further include an end plate 230 and 250. The end plate 230 and 250 may be connected to the module first side surface 2193, the module second side surface 2195, the module bottom surface 2191, and the module cover 211 to close each of the open ends of the module body 219. In other words, the end plate 230 and 250 may be in contact with both edges of the module bottom surface 2191 that are not connected to the module first side surface 2193 and the module second side surface 2195. The end plate 230 and 250, the module bottom surface 2191, the module first side surface 2193, the module second side surface 2195, and the module cover 211 may together form the accommodating space 291.

In one embodiment, the battery module 200 may include a plurality of battery cells 110 disposed in the accommodating space 291.

The plurality of battery cells 110 may be stacked along a preset direction. Referring to FIG. 1, the plurality of battery cells 110 may be stacked along a first direction DR1. A cell assembly 100 may include a plurality of battery cells 110 stacked in such a specific direction. Electrode leads 111 and 112 of each of the plurality of battery cells 110 may protrude from the main body 115 in the second direction DR2. Among electrode leads 111 and 112 of each of the plurality of battery cells 110, one electrode lead 112 may protrude from one side of the main body 115 in the second direction DR2, and the other electrode lead 111 may protrude from the other side of the main body 115 in a direction opposite to the second direction DR2.

In the present disclosure, a first direction DR1, a second direction DR2, and a third direction DR3 may refer to directions that are perpendicular to each other.

When the plurality of battery cells 110 are stacked along the first direction DR1, the facing surfaces of the main body 115 of one battery cell 110 among the plurality of battery cells 110 in the first direction DR1 may respectively be a main body first side surface 1151 and a main body second side surface (not shown). In other words, the main body first side surface 1151 of one of the plurality of battery cells 110 may face the main body second side surface (not shown) of one of the battery cells 110. In addition, the main body first side surface 1151 of one battery cell 110 of the plurality of battery cells 110 may face the main body second side surface (not shown) of the other battery cell 110 adjacent to the battery cell 110.

In one embodiment, the battery module 200 may include a plurality of pad portions that are distinguished from each other. The battery module 200 may include a plurality of pad portions. The positions at which the plurality of pad portions are disposed in the battery module 200 may be different from each other. The pad portion may be compressed in a direction in which the battery cell 110 swells and then restored to suppress swelling of the battery cell 110. In other words, the pad portion may be provided to pressurize a battery cell 110 adjacent to the pad portion with a predetermined pressure. Therefore, the pad portion may be referred to as a buffer pad, a pressurizing pad, the surface pressure pad, or the like.

In addition, the pad portion may include one selected from the group consisting of polyurethane resin, silicone resin, and rubber resin or a combination thereof. However, the material of the pad portion is not limited to the materials listed above.

The battery module 200 may include a first pad portion 117 and a second pad portion 118. The positions at which each of the first pad portion 117 and the second pad portion 118 is disposed may be different from each other. The first pad portion 117 may be disposed between at least one pair of battery cells 110 that are adjacent to each other among the plurality of battery cells 110. Specifically, the first pad portion 117 may be disposed in contact between two battery cells 110 that are adjacent to each other among the plurality of battery cells 110. As will be described later, the first pad portion 117 may also be disposed between two battery groups that are adjacent to each other. In addition, the second pad portion 118 may be disposed between a side wall of the module case 210 and a battery cell 110 closest to the side wall of the module case 210. Specifically, the second pad portion 118 may be disposed between the module first side surface 2193 and/or the module second side surface 2195 and a battery cell 110 closest to the module first side 2193 and/or the module second side 2195.

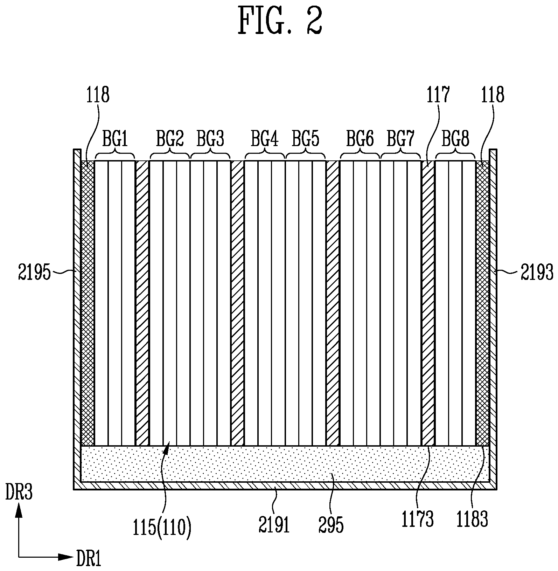

Referring to FIGS. 2 to 7, the second pad portion 118 may be positioned between the module first side surface 2193 and a battery cell 110 closest to the module first side surface 2193 and between the module second side surface 2195 and a battery cell 110 closest to the module second side surface 2195.

The first pad portion 117 may be disposed between two battery cells 110, and the second pad portion 118 may be disposed between a battery cell 110 and the module case 210. In addition, when swelling occurs in the battery cell 110, the degree of swelling of each battery cell 110 may be the same. Therefore, surface pressures applied to each of the first pad portion 117 and the second pad portion 118 when swelling occurs in the battery cell 110 may be different. Specifically, the surface pressure applied to the first pad portion 117 may be less than the surface pressure applied to the second pad portion 118.

In the battery module 200 of the present disclosure, surface pressures applied by each of the first pad portion 117 and the second pad portion 118 to an adjacent battery cell 110 may be different. Specifically, the surface pressure applied by the first pad portion 117 to an adjacent battery cell 110 may be less than the surface pressure applied by the second pad portion 118 to an adjacent battery cell 110.

The impact of different surface pressures applied to the first pad portion 117 and the second pad portion 118 from an adjacent battery cell 110 may be offset. In the battery module 200 of the present disclosure, the surface pressure applied to an adjacent battery cell 110 by the first pad portion 117 may be less than the surface pressure applied to an adjacent battery cell 110 by the second pad portion 118, and accordingly, various imbalances (e.g., misalignment of battery cell 110 positions or voltage imbalance between battery cells 110) occurring due to swelling of the battery cell 110 in the battery module 200 can be resolved.

In other words, pressures applied to the first pad portion 117 and the second pad portion 118 due to swelling may be different from each other. This is because the surface pressure of the first pad portion 117 is affected by battery cells 110 positioned adjacent to both sides, while the surface pressure of the second pad portion 118 is affected by battery cells 110 positioned adjacent to one side. Presumably, the surface pressure of the first pad portion 117 may be less than the surface pressure of the second pad portion 118.

Therefore, when swelling occurs in at least some battery cells among the plurality of battery cells 110, the surface pressure that the second pad portion 118 applies to a battery cell 110 adjacent to the second pad portion 118 may be greater than the surface pressure that the first pad portion 117 applies to a battery cell 110 adjacent to the first pad portion 117. This surface pressure imbalance may ultimately cause misalignment of battery cell (110) positions and distortion of an electrode assembly. This may cause a deviation in voltage and charge capacity between battery cells 110 due to lifting of an active material from an electrode plate of an electrode assembly.

To solve the problems due to the surface pressure imbalance, a battery module 200 according to the present disclosure may include a first pad portion 117 and a second pad portion 118 having different properties, materials, or sizes from the first pad portion 117. The characteristics of the first pad portion 117 and the second pad portion 118 are described below.

As described above, the surface pressure applied by the first pad portion (117) to an adjacent battery cell 110 may be less than the surface pressure applied by the second pad portion 118 to an adjacent battery cell 110.

For example, the thicknesses of the first pad portion 117 and the second pad portion 118 may be the same, but the materials of the first pad portion 117 and the second pad portion 118 may be different. As another example, the materials of the first pad portion 117 and the second pad portion 118 may be the same, but the thicknesses of the first pad portion 117 and the second pad portion 118 may be different. As another example, the thickness and material of the first pad portion 117 and the second pad portion 118 may be the same, but another member may be added to one pad portion among the first pad portion 117 and the second pad portion 118.

In one embodiment, the material properties (or physical properties) related to the surface pressure of each of the first pad portion 117 and the second pad portion 118 may be uniform. Specifically, the measurement results of the physical properties related to the surface pressure of each of the first pad portion 117 and the second pad portion 118 may be uniform within an allowable error range even when the measurement points of the physical properties are changed.

For example, the first pad portion 117 may include different regions on the same plane. Here, any material property related to the surface pressure measured in each of the different regions may be uniform with each other. The same may be true for the second pad portion 118.

For reference, in the preset disclosure, being the same or uniform may mean being the same or uniform within an allowable error range, unless otherwise specified. For example, the fact that a property measurement value is the same may include not only that the measurement values are completely the same, but also that both measurement values are within an error range. For example, the fact that a property measurement value is the same in the present disclosure may mean that the difference between the measurement values is approximately less than about ±5%, less than ±3%, or less than ±1%.

In one embodiment, the material properties related to the surface pressure of each of the first pad portion 117 and the second pad portion 118 may include compression force deflection (CFD) and compression set.

In the present disclosure, the "CFD" of a member may refer to a measure of the force required to compress the member at a specific compression ratio. The CFD may be measured to determine the stress by which a pad portion is compressed with respect to a change in the dimension (or size) of a battery cell.

For example, the CFD of the pad portions may be measured in the following order. (1) Three specimens of 50 mm × 50 mm (width × length) are prepared. Since the CFD is measured, the thickness of the specimens may be a preset target thickness. First, a release film attached to the specimen is first removed, and then the thickness of the specimen is measured using a dial gauge according to the thickness measurement method of the specimens. When measuring the thickness of the specimens, the pressure range of the dial tip should be maintained at 170 ± 35 Pa (or 1.73 ± 0.36 gf/cm³). Finally, the thickness measurement method of the specimens may be performed by confirming whether the thickness measurement value of the specimens measured through the dial gauge is distributed within the target thickness ± 0.1 mm. In the present disclosure, the thickness measurement method of the specimens is briefly described, but specifically, the thickness measurement method of the specimens may be according to ASTM D3574. (2) The specimen is placed between flat plates having a large surface area compared to the specimen. The thickness of an upper plate among the flat plates is 133% or more of the thickness of the specimen. (3) The load applied to the specimen by the upper plate is 2100 ± 210 Pa (or 0.536 ± 0.054 kgf when the area of the specimen is 2500 mm²), and this may be adjusted by the weight of the upper plate. The applied load is changed to 2100 ± 210 Pa instead of 140 Pa specified in ASTM D3574-3 in consideration of the material of the specimen. (4) The specimen is pre-flexed twice at a speed of 250 mm/min to a range of 75% of the thickness of the specimen. (5) After the pre-flexing is completed, the specimen is allowed to have a rest time for 6 ± 1 minutes, and then the main compression is performed at a speed of 0.5 mm/min to a range of 80% of the sample thickness. (6) The compression ratio of the specimens may be calculated by confirming the compressive stress (unit: Pa) of the specimens at each point where the thickness becomes 20%, 30%, 40%, 50%, 60%, or 70% of the specimen thickness.

In the present disclosure, the compression set (or permanent compression recovery rate) of a certain member may refer to a ratio (%) of a deformed height after a specific member is compressed to a specified height and allowed to stand at a specific temperature for a specific period of time. In the present disclosure, the compression set may be measured to confirm how much a pad portion may recover its compressive properties when exposed to specific conditions (temperature and/or load). In the present disclosure, the compression set (unit: %) of the pad portions may be measured in the following order. (1) Three specimens of 50 mm × 50 mm (width × length) are prepared. The thickness of the specimens may be measured by the same method as when measuring the CFD. (2) The specimen is compressed to 50 ± 1% of the original thickness of the specimen and then fixed along the thickness direction of the specimen with a jig. (3) Within 15 minutes after the thickness of the specimen is fixed, it is placed in a chamber having a temperature of 70 ± 2 °C and a relative humidity of 6 RH% (% relative humidity) or less. (4) The specimen placed in the chamber is stored under the fixed conditions of the chamber for 22 hours. (5) After 22 hours, the jig is removed from the specimen taken out of the chamber. (6) The specimen from which the jig has been removed is allowed to recover for 30 to 40 minutes at a temperature of 23 ± 2 °C and a relative humidity of 50 ± 5 RH% (% relative humidity). (7) After recovery for 40 minutes, the thickness of the specimen is measured. The thickness of the specimen may be measured by the same method as when measuring the CFD. (8) The compression set is calculated according to the formula: Compression set (%) = (1-(t₀-t_{f})/(t₀)) × 100. Here, t₀ is the sample thickness before storage, and t_{f} is the sample thickness after storage.

Although the compression set of above specimens is briefly described in the present disclosure, specifically, the thickness measurement method of the specimens and the compression set measurement method of the specimens are according to follow ASTM D3574.

In one embodiment, the first pad portion 117 may include a first region and a second region, which are different regions on the same plane. Material properties related to the surface pressure of the first region of the first pad portion 117 and the second region of the first pad portion 117 may be the same. In other words, the first pad portion 117 may include a first region and a second region, which are different regions on the same plane, and the CFD of each of the first region and the second region may be the same. In addition, the first pad portion 117 may include a first region and a second region, which are different regions on the same plane, and the compression set of the first region and the second region may be the same.

In one embodiment, the second pad portion 118 may include a first region and a second region, which are different regions on the same plane. The material properties related to the surface pressure of the first region of the second pad portion 118 and the second region of the second pad portion 118 may be the same. In other words, the second pad portion 118 may include a first region and a second region, which are different regions on the same plane, and the CFD of each of the first region and the second region may be the same. In addition, the second pad portion 118 may include a first region and a second region, which are different regions on the same plane, and the compression set of the first region and the second region may be the same.

FIGS. 2 to 7 show cross-sectional views of a battery module of one embodiment.

In one embodiment, the material properties related to the surface pressure of each of the first pad portion 117 and the second pad portion 118 may be different from each other. As described above, the material properties related to the surface pressure of each of the first pad portion 117 and the second pad portion 118 may include CFD and compression set.

Therefore, the CFD of the first pad portion 117 may be different from the CFD of the second pad portion 118. The greater the CFD of each pad portion, the greater the surface pressure applied to an adjacent battery cell by each pad portion. In a battery module 200 of one embodiment, the surface pressure applied to the first pad portion 117 may be less than the surface pressure applied to the second pad portion 118. Therefore, the CFD of the first pad portion 117 may be smaller than the CFD of the second pad portion 118.

In addition, the compression set of the first pad portion 117 may be different from the compression set of the second pad portion 118. The greater the compression set of each pad portion, the greater the surface pressure applied to an adjacent battery cell by each pad portion. The surface pressure applied to the first pad portion 117 may be less than the surface pressure applied to the second pad portion 118. Therefore, the compression set of the first pad portion 117 may be less than the compression set of the second pad portion 118.

In one embodiment, when the material properties related to the surface pressure of each of the first pad portion 117 and the second pad portion 118 are different from each other, the thicknesses of each of the first pad portion 117 and the second pad portion 118 may be the same.

In the present disclosure, the thickness of the pad portion may refer to the distance between side surfaces of the pad portion. Specifically, the thickness of the pad portion may refer to the shortest distance between side surfaces of the pad portion. More specifically, the thickness of the pad portion may refer to the shortest distance of the pad portion in the first direction DR1.

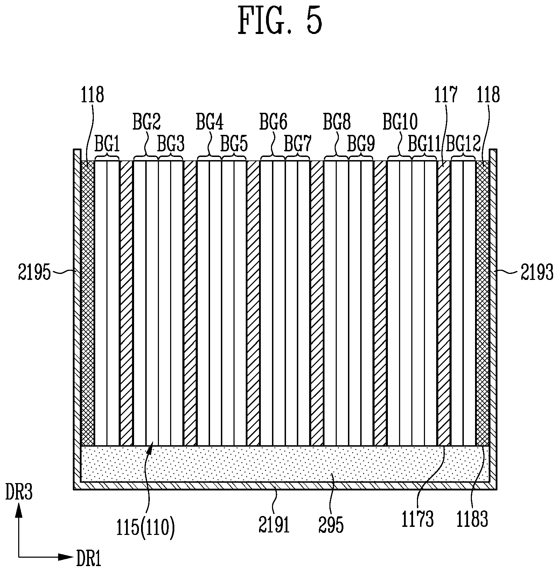

In one embodiment, each of the first pad portion 117 and the second pad portion 118 may include different materials to make the material properties related to their respective surface pressures different. Here, each of the first pad portion 117 and the second pad portion 118 may have the same thickness (see FIGS. 2 and 5). Specifically, different materials may be selected for each of the first pad portion 117 and the second pad portion 118 so that the first pad portion 117 has a CFD and/or compression set less than those of the second pad portion 118. At this time, the surface pressure applied by the first pad portion 117 to an adjacent battery cell 110 may be smaller than the surface pressure applied by the second pad portion 118 to an adjacent battery cell 110.

For example, the materials of each of the first pad portion 117 and the second pad portion 118 may be the same, but the thicknesses of each of the first pad portion 117 and the second pad portion 118 may be different. In other words, the materials of each of the first pad portion 117 and the second pad portion 118 may include materials that may exhibit the same physical properties with respect to the surface pressure, while the thicknesses of each of the first pad portion 117 and the second pad portion 118 may be different.

In other words, the distance (or thickness) between side surfaces of the first pad portion 117 may be longer than the distance between side surfaces of the second pad portion 118. Specifically, the surface pressure applied by a thicker pad portion of the two pad portions made of the same material to an adjacent battery cell may be less than the surface pressure applied by a thinner pad portion of the two pad portions to an adjacent battery cell. Therefore, the surface pressure applied by the first pad portion 117 to an adjacent battery cell 110 may be less than the surface pressure applied by the second pad portion 118 to an adjacent battery cell 110. As described above, the thickness of the pad portion may be the shortest distance of the pad portion in the first direction DR1.

As another example, the thicknesses of each the first pad portion 117 and the second pad portion 118 may be the same, but the materials of the first pad portion 117 and the second pad portion 118 may be different.

As another example, although the thickness and material of each of the first pad portion 117 and the second pad portion 118 are the same, another member may be added to one pad portion among the first pad portion 117 and the second pad portion 118. In other words, one pad portion among the first pad portion 117 and the second pad portion 118 may be formed by stacking different materials along the thickness direction of the pad portion (or the direction in which a plurality of battery cells are stacked).

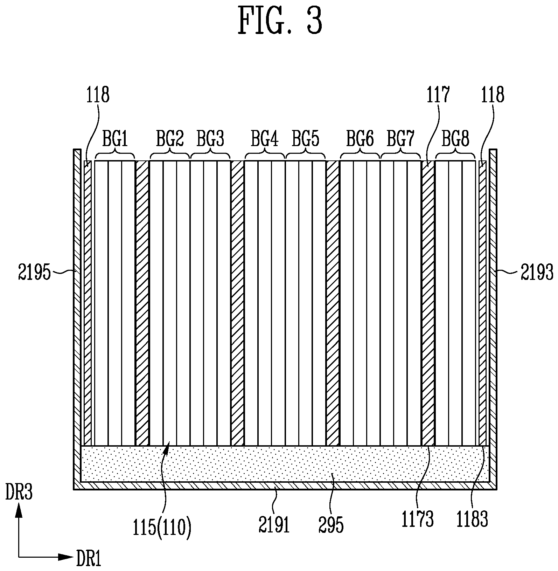

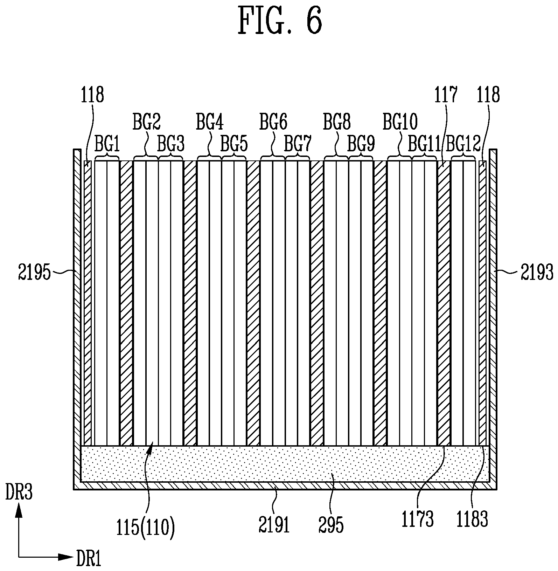

Referring to FIG. 3 and FIG. 6, each of the first pad portion 117 and the second pad portion 118 may include the same material. At this time, each of the first pad portion 117 and the second pad portion 118 may have different thicknesses from each other.

In one embodiment, each of the first pad portion 117 and the second pad portion 118 may include the same material, specifically, a material that may exhibit material properties related to the same surface pressure, and the thicknesses of each of the first pad portion 117 and the second pad portion 118 may be the same. At this time, another member may be added around the first pad portion 117.

The battery module 200 of one embodiment may further include: a stacking portion 119 disposed between the first battery portion 117 and the battery cells 110 adjacent to the first pad portion 117. As a result, the total thickness of the first pad portion 117 may be greater than the total thickness of the second pad portion 118. Since the thicker a member is, the less the surface pressure applied to a battery cell adjacent to the member is, the surface pressure applied by the first pad portion 117 to an adjacent battery cell 110 may be less than the surface pressure applied by the second pad portion 118 to an adjacent battery cell 110.

In addition, the stacking portion 119 may be formed of a different material from the first pad portion 117.

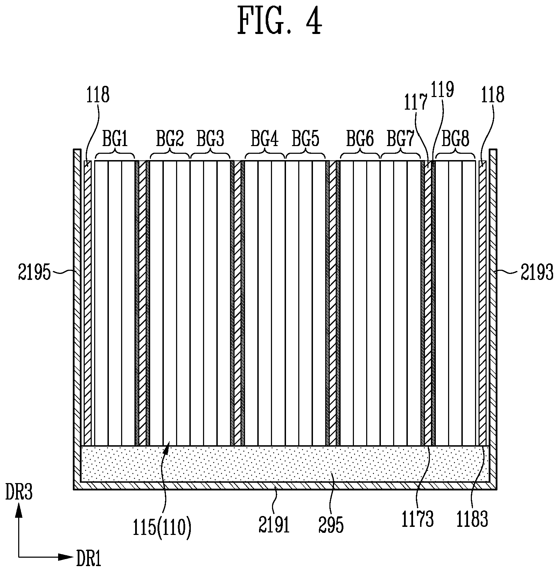

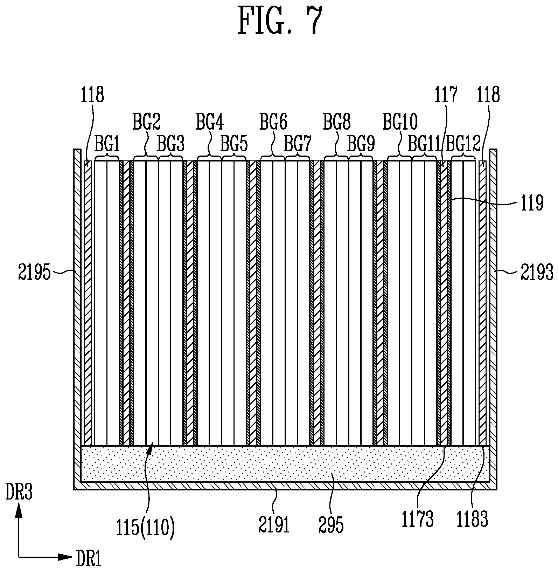

Referring to FIG. 4 and FIG. 7, each of the first pad portion 117 and the second pad portion 118 may include the same material, and the thicknesses of each of the first pad portion 117 and the second pad portion 118 may be the same. At this time, the stacking portion 119 may be disposed between the first pad portion 117 and ae battery cell 110 adjacent to the first pad portion 117.

Alternatively, the stacking portion 119 may be stacked on both side surfaces of the first pad portion 117 along the thickness direction of the first pad portion 117 or the stacking direction of the plurality of battery cells 110. In other words, the first pad portion 117 may be in a form in which the stacking portion 119 is attached to both side surfaces of the first pad portion 117.

The first pad portion 117 and the second pad portion 118 may be disposed in consideration of the energy density of the battery module 200, and the like. The quantity, size, and the like of the first pad portion 117 and the second pad portion 118 may be adjusted in consideration of the energy density of the battery module 200, and the like.

In one embodiment, the total volume of the first pad portion 117 and the second pad portion 118 may occupy 2% by volume to 7% by volume, specifically 2.5% by volume to 7% by volume, of the accommodating space 291. However, when at least one battery cell 110 among the plurality of battery cells 110 expands, the volume occupied by the first pad portion 117 and the second pad portion 118 in the accommodating space 291 may decrease.

In one embodiment, each of the plurality of battery cells 110 may include: a main body portion 115 including an electrode assembly storing or generating electrical energy; and an electrode lead 111 and 112 electrically connected to the electrode assembly and also protruding from the main body portion 115 to electrically connect the electrode assembly to the outside. Here, the pad portion may be attached to a specific position of the battery cell 110. Each of the first pad portion 117 and the second pad portion 118 may be disposed adjacent to the main body portion 115 of the battery cell 110. Specifically, each of the first pad portion 117 and the second pad portion 118 may be positioned adjacent only to the main body portion 115 of the battery cell 110. In other words, each of the first pad portion 117 and the second pad portion 118 may not be adjacent to an electrode lead 111 and 112 of the battery cell 110. Referring to FIG. 1, it may be confirmed that an electrode lead 111 and 112 protrude outwardly from the cell assembly 100. This may mean that each of the first pad portion 117 and the second pad portion 118 is adjacent only to the main body of the battery cell 110.

In addition to the battery cell 110, the first pad portion 117, and the second pad portion 118, the battery module 200 of one embodiment may include other components necessary for driving a battery module 200.

In one embodiment, the battery module 200 may further include a heat dissipation portion 295 disposed between the bottom surface of the module case 210 and the plurality of battery cells 110. The heat dissipation portion 295 functions to release the heat generated from the battery cell 110 to the outside. Typically, the heat dissipation portion 295 may include a thermal adhesive TA and the like. Referring to FIGS. 2 to 7, it may be confirmed that the heat dissipation portion 295 is positioned on the bottom surface of the module case 210, and the plurality of battery cells 110 are positioned on the heat dissipation portion 295. In addition, referring to FIGS. 2 to 7, the heat dissipation portion 295 may be in contact with each of the first pad bottom surface 1173, the second pad bottom surface 1183, and the bottom surface of the battery cell 110.

In one embodiment, the battery module 200 may further include a busbar assembly 150 disposed in the accommodating space 291 and also electrically connecting the plurality of battery cells 110 to the outside. Specifically, the busbar assembly 150 may be disposed between the electrode leads 111 and 112 of the battery cells 110 and the end plates 230 and 250 of the module case 210. Referring to FIG. 1, it can be seen that the busbar assembly 150 is disposed between the plurality of battery cells 110 and the end plates 230 and 250 to electrically connect the battery cells 110 to the outside.

The plurality of battery cells 110 and the pad portions disposed inside the module case 210 may not be inclined in the module case 210. This is because, when these are disposed in an inclined manner inside the battery module (200), a large deviation may occur in the surface pressure applied to each battery cell 110. In one embodiment, each of the plurality of battery cells 110, the first pad portion 117, and the second pad portion 118 may be disposed vertically with respect to the bottom surface of the module case 210. Referring to FIGS. 2 to 7, FIGS. 2 to 7 shows views of the battery module 200 cut and viewed in the second direction DR2. Referring to FIGS. 2 to 7, the plurality of battery cells 110 may be stacked along the first direction DR1, and each of the plurality of battery cells 110, the first pad portion 117, and the second pad portion 118 may be formed along the third direction DR3, and each of them may be perpendicular to the module bottom surface 2191.

In the present disclosure, the fact that an angle formed by two members is perpendicular or that two members are parallel to each other may include not only being geometrically perpendicular or parallel but also being within a slight error range.

In another embodiment, a plurality of battery cells 110 included in the battery module 200 may be disposed according to a specific rule, and the first pad portion 117 and the second pad portion 118 that apply different surface pressures between the battery cells 110 disposed in this manner may be disposed according to a specific rule.

A battery module 200 of another embodiment of the present disclosure may include a plurality of battery groups and a plurality of pad portions.

In the present disclosure, a battery group may be a bundle of a plurality of battery cells 110.

More specifically, the battery group may refer to adjacent battery cells among a plurality of battery cells 110 grouped into a preset number of bundles. The number of bundles may vary depending on the position of the battery group in the module case 210.

In one embodiment, the module case 210 may accommodate the battery group. The module case 210 of the present embodiment may be the same as the module case 210 of the above-described embodiment. Therefore, the contents regarding the above-described module case 210 may also be applied to this module case 210.

In one embodiment, among the plurality of pad portions, one pad portion may be positioned between two battery groups, and another pad portion may be positioned between one battery group and a side wall of the module case 210.

Therefore, the battery module 200 may include: a plurality of battery groups, each of which is a bundle of a plurality of battery cells 110; a module case 210 accommodating the plurality of battery groups; a first pad portion 117 disposed between at least one pair of adjacent battery groups among the plurality of battery groups; and a second pad portion 118 disposed between a side wall of the module case 210 and a battery group closest to the side wall of the module case 210.

In addition, the surface pressure applied by the first pad portion 117 to an adjacent battery cell 110 may be less than the surface pressure applied by the second pad portion 118 to an adjacent battery cell 110.

In the sense that the first pad portion 117 of the battery module 200 of this embodiment is disposed between battery cells 110, and that the second pad portion 118 is disposed between a side wall of a module case 210 and the battery cells 110, the first pad portion 117 and the second pad portion 118 of the battery module 200 of this embodiment may be the same as the first pad portion 117 and the second pad portion 118 of the battery module 200 of the above-described embodiment. Therefore, the description of the first pad portion 117 and the second pad portion 118 of the above-described embodiment may also be applied to the description of the first pad portion 117 and the second pad portion 118 of this embodiment.

In one embodiment, the first pad portion 117 and the second pad portion 118 may not be disposed between battery cells 110 in one battery group. In other words, the battery group may be a bundle of a plurality of battery cells 110 and may consist of the plurality of battery cells 110.

Referring to FIGS. 2 to 4, the first pad portion 117 and the second pad portion 118 may not be disposed between battery cells 110 of each of the plurality of battery groups BG1, BG2, BG3, BG4, BG5, BG6, BG7, and BG8. In other words, each of the plurality of battery groups BG1, BG2, BG3, BG4, BG5, BG6, BG7, and BG8 may consist of a plurality of battery cells 110.

Referring to FIGS. 5 to 7, the first pad portion 117 and the second pad portion 118 may not be disposed between the battery cells 110 of each of the plurality of battery groups BG1, BG2, BG3, BG4, BG5, BG6, BG7, BG8, BG9, BG10, BG11, and BG12. In other words, each of the plurality of battery groups BG1, BG2, BG3, BG4, BG5, BG6, BG7, BG8, BG9, BG10, BG11, and BG12 may consist of a plurality of battery cells 110.

In one embodiment, each of the plurality of battery groups may be a bundle of the same number of battery cells 110. Specifically, FIGS. 2 to 4 show cross-sectional views of the battery module 200 when each of the plurality of battery groups is a bundle of three battery cells 110. FIGS. 5 to 7 show cross-sectional views of the battery module 200 when each of the plurality of battery groups is a bundle of two battery cells 110.

The first pad portion 117 may be disposed according to a specific rule in the battery module 200.

In one embodiment, the other battery group disposed adjacent to the one pair of battery groups between which the first pad portion 117 is disposed may be in contact with one battery group of the one pair of battery groups. In other words, the battery groups may be in contact with each other, and the first pad portion 117 may be disposed therebetween according to a specific rule.

Referring to FIGS. 2 to 7, when one first pad portion 117 is disposed between a plurality of battery groups BG3 and BG4, another battery group BG2 adjacent to one battery group BG3 among these battery groups may be in contact with the battery group BG3. In addition, another battery group BG5 adjacent to the other battery group BG4 among these battery groups may be in contact with the battery group BG4. In this case, a main body first side surface 1151 of a battery cell constituting one battery group may be in contact with a main body second side surface (not shown) of a battery cell constituting another battery group.

In the present disclosure, the fact that two members are in contact may mean that the two members are in direct contact without any additional element interposed between the members.

In one embodiment, battery cells 110 of the plurality of battery groups may be electrically connected in parallel with each other, and the plurality of battery groups may be electrically connected in series with each other. Specifically, each of the plurality of battery groups may be a bundle of battery cells 110 electrically connected in parallel with each other, and each of the plurality of battery groups may be electrically connected in series with each other. More specifically, each of the plurality of battery groups may be a bundle consisting of battery cells 110 electrically connected in parallel with each other, and the plurality of battery groups may be electrically connected in series with each other. The above-described busbar assembly may electrically connect each of the plurality of battery groups with each other.

The above description is merely an example of applying the principles of the present disclosure. Other components may be further included within a scope without departing from the scope of the present disclosure.

## Claims

1. A battery module comprising:
a plurality of battery cells stacked along a preset stacking direction;
a module case forming an accommodating space for accommodating the plurality of battery cells;
a first pad portion disposed between at least one pair of adjacent battery cells among the plurality of battery cells; and
a second pad portion disposed between a side wall of the module case and a battery cell closest to the side wall of the module case;
wherein a surface pressure applied by the first pad portion to an adjacent battery cell is less than a surface pressure applied by the second pad portion to an adjacent battery cell.

2. The battery module according to claim 1, wherein the first pad portion includes a first region and a second region which are different regions on the same plane, and a compression force deflection of each of the first region and the second region is the same.

3. The battery module according to claim 1 or 2, wherein the first pad portion includes a first region and a second region which are different regions on the same plane, and a compression set of each of the first region and the second region is the same.

4. The battery module according to any one of the preceding claims, wherein
the second pad portion includes a first region and a second region which are different regions on the same plane, and a compression force deflection of each of the first region and the second region is the same.

5. The battery module according to any one of the preceding claims, wherein
the second pad portion includes a first region and a second region which are different regions on the same plane, and a compression set of each of the first region and the second region is the same.

6. The battery module according to any one of the preceding claims, wherein
a compression force deflection of the first pad portion is smaller than a compression force deflection of the second pad portion.

7. The battery module according to any one of the preceding claims, wherein
a compression set of the first pad portion is smaller than a compression set of the second pad portion.

8. The battery module according to any one of the preceding claims, wherein
a distance between both side surfaces of the first pad portion facing one battery cell among the plurality of battery cells along the stacking direction is longer than a distance between both side surfaces of the second pad portion facing one battery cell among the plurality of battery cells along the stacking direction.

9. The battery module according to any one of the preceding claims, further
comprising: a stacking portion stacked on at least one side surface among both side surfaces of the first pad portion facing one battery cell among the plurality of battery cells along the stacking direction.

10. The battery module according to any one of the preceding claims, wherein
a total volume of the first pad portion and the second pad portion occupies 2% by volume to 7% by volume of the accommodating space.

11. The battery module according to any one of the preceding claims, wherein
each of the plurality of battery cells includes:
a main body portion including an electrode assembly storing or generating electrical energy; and
an electrode lead electrically connected to the electrode assembly and also protruding from the main body portion to electrically connect the electrode assembly to the outside;
wherein each of the first pad portion and the second pad portion is disposed adjacent to the main body portion of the battery cell.

12. The battery module according to any one of the preceding claims, further
comprising: a heat dissipation portion disposed between a bottom surface of the module case and the plurality of battery cells.

13. The battery module according to any one of the preceding claims, further
comprising: a busbar assembly disposed in the accommodating space and electrically connecting the plurality of battery cells to an outside.

14. The battery module according to any one of the preceding claims, wherein
each of the plurality of battery cells, the first pad portion, and the second pad portion is disposed vertically with respect to a bottom surface of the module case.

15. A battery module comprising:
a plurality of battery groups, each of which is a bundle of a plurality of battery cells;
a module case accommodating the plurality of battery groups;
a first pad portion disposed between at least one pair of adjacent battery cells among the plurality of battery cells; and
a second pad portion disposed between a side wall of the module case and a battery cell closest to the side wall of the module case;
wherein a surface pressure applied by the first pad portion to an adjacent battery cell is less than a surface pressure applied by the second pad portion to an adjacent battery cell.
